# EUROPÄISCHE PATENTSCHRIFT

(11) **EP 2 132 067 B1**
(45) Veröffentlichungstag und Bekanntmachung des Hinweises auf die Patenterteilung: **07.03.2012**
(21) Anmeldenummer: 07729477.5
(22) Anmeldetag: 24.05.2007
(51) Int. Cl.: B60T 7/04, B60T 8/40

(54) **BETÄTIGUNGSEINHEIT FÜR EINE KRAFTFAHRZEUGBREMSANLAGE**
ACTUATING UNIT FOR A MOTOR VEHICLE BRAKE SYSTEM
UNITÉ D'ACTIONNEMENT POUR SYSTÈME DE FREINAGE D'AUTOMOBILE

(30) Priorität: 05.03.2007 DE 102007010513
(43) Veröffentlichungstag der Anmeldung: 16.12.2009
(73) Patentinhaber: Continental Teves AG & Co. OHG, 60488 Frankfurt (DE)
(72) Erfinder: VON HAYN, Holger, 61118 Bad Vilbel (DE); SCHONLAU, Jürgen, 65396 Walluf (DE); RÜFFER, Manfred, 65843 Sulzbach (DE); SELLINGER, Thomas, 63073 Offenbach (DE); MILISIC, Lazar, 61462 Königstein (DE)
(86) Internationale Anmeldenummer: PCT/EP2007/055046
(87) Internationale Veröffentlichungsnummer: WO 2008/107023

(56) Entgegenhaltungen:
- EP-A- 1 369 329
- WO-A-2006/084864
- DE-A1-102004 011 622
- DE-C1- 19 741 366

## Beschreibung

Die Erfindung betrifft eine Betätigungseinheit für eine Kraftfahrzeugbremsanlage vom Typ "Brake-by-wire", die aufweist:
a) einen Bremskraftverstärker, der sowohl mittels eines Bremspedals in eine kraftübertragende Verbindung bringbaren Eingangsglieds als auch fahrerwunschabhängig sowie unabhängig vom Fahrerwillen mittels einer elektronischen Steuereinheit betätigbar ist, wobei zwischen dem Bremspedal und dem Bremskraftverstärker Mittel vorgesehen sind, die in der Betriebsart "Brake-by-wire" eine Entkopplung einer kraftübertragenden Verbindung zwischen Bremspedal und Bremskraftverstärker ermöglichen,
b) einen dem Bremskraftverstärker nachgeschalteten Hauptbremszylinder,
c) Mittel zum Erfassen eines Fahrerwunsches bzw. des Betätigungsweges des Bremspedals,
d) einen mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist, sowie
e) eine hydraulische Zu- bzw. Abschalteinrichtung, die den Pedalwegsimulator in der Betriebsart "Brake-by-wire" zu- und außerhalb der Betriebsart "Brake-by-wire" abschaltet und die durch eine Zylinder-Kolben-Anordnung gebildet ist, deren Druckraum mittels einer absperrbaren Verbindung mit einem Druckmittelvolumen-Aufnahmeelement verbunden ist und an deren Kolben sich ein Simulatorgehäuse abstützt.

Aus der DE 10 2004 011 622 A1 ist eine Bremsbetätigungseinheit mit einem mit dem Bremspedal zusammenwirkenden Pedalwegsimulator bekannt, welcher mit elektrohydraulischen Mitteln zu- und abschaltbar ist.

Eine gattungsgemäße Betätigungseinheit ist z. B. aus der internationalen Patentanmeldung der Anmelderin WO 2006/084864 A1 bekannt. Die Abstützung des oben erwähnten Simulatorgehäuses an der Zu- bzw. Abschalteinrichtung erfolgt bei der vorbekannten Betätigungseinheit mittels einer Kolbenstange, über die außerhalb der Betriebsart "Brake-by-wire" die Bewegung des Bremspedals bzw. des Simulatorgehäuses auf den Kolben übertragen wird. Die Kolbenstange ist mit dem Kolben starr verbunden und wird von diesem geführt. Der Kolben weist auf seinem dem Druckraum abgewandten Ende eine Ringfläche auf, die in unbetätigter Stellung der Anordnung an einem metallischen Anschlagring anliegt. Als nachteilig wird jedoch die Tatsache empfunden, dass bei einem schlagartigen Lösen des Bremspedals am Anschlag hohe Beschleunigungswerte auftreten, die ein unerwünschtes Spiel zwischen der Kolbenstange und dem Kolben der Zylinder-Kolben-Anordnung verursachen können.

Es ist daher Aufgabe der vorliegenden Erfindung, geeignete Maßnahmen vorzuschlagen, die beim Aufrechterhalten der einwandfreien Funktion eine wirksame Trennung der Kolbenstange vom Kolben ermöglichen.

Diese Aufgabe wird erfindungsgemäß dadurch gelöst, dass zwischen dem Kolben und der Kolbenstange eine Verbindung vorgesehen ist, deren Freiheitsgrad = 3 ist, wobei die Verbindung zwischen dem Kolben und der Kolbenstange als eine Gelenkverbindung ausgebildet ist, bei der die Kolbenstange einen sphärischen Gelenkkopf aufweist und der Kolben mit einer entsprechend ausgebildeten Kopfaufnahme versehen ist und wobei die Kolbenstange einen kugelsegmentförmigen Abschnitt aufweist, der in unbetätigter Stellung der Zylinder-Kolben-Anordnung an einem entsprechend geformten Anschlagelement unter

Vorspannung einer Feder anliegt.

Weitere Merkmale des Erfindungsgegenstandes sind in den Unteransprüchen 2 bis 10 aufgeführt.

Die erfindungsgemäße Betätigungseinheit wird in der nachfolgenden Beschreibung unter Bezugnahme auf die beiliegende Zeichnung näher erläutert. In der Zeichnung zeigen:
Fig. 1 eine erfindungsgemäße Betätigungseinheit einer Kraftfahrzeugbremsanlage vom Typ "Brake-by-wire" in einer dreidimensionalen Darstellung; und
Fig. 2 eine Schnittdarstellung der bei der in Fig. 1 gezeigten Betätigungseinheit verwendeten, dem Pedalwegsimulator zugeordneten Zu- und Abschalteinrichtung.

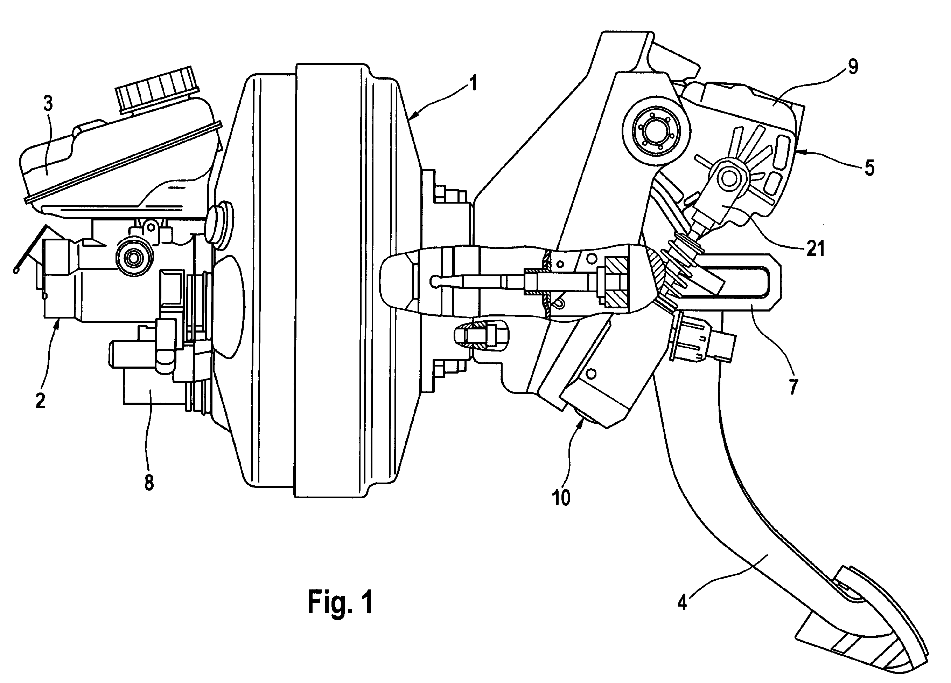

Die in Fig. 1 dargestellte Betätigungseinheit besteht aus einem Bremskraftverstärker, vorzugsweise einem Unterdruckbremskraftverstärker 1, einem dem Bremskraftverstärker 1 nachgeschalteten Hauptbremszylinder, vorzugsweise einem Tandemhauptzylinder 2, an dessen nicht dargestellte Druckräume unter Zwischenschaltung einer ebenfalls nicht dargestellten hydraulischen Steuer- und Regeleinheit Radbremsen des Kraftfahrzeuges angeschlossen sind, sowie einem dem Hauptbremszylinder 2 zugeordneten Druckmittelvorratsbehälter 3. Der Betätigung des Bremskraftverstärkers 1 durch den Fahrer dient ein Bremspedal 4, wobei ein mit dem Bremspedal 4 insbesondere in der Betriebsart "Brake-by-wire" zusammenwirkender, lediglich angedeuteter Pedalwegsimulator 5 vorgesehen ist, der dem Fahrer das gewöhnliche Bremspedalgefühl vermittelt. Ein Fahrerverzögerungswunsch bzw. der Betätigungsweg des Bremspedals 4 wird mittels mindestens einer Sensoreinrichtung erfasst, deren Signale einer nicht gezeigten elektronischen Steuereinheit zugeführt werden. Durch die Ausgangssignale der elektronischen Steuereinheit ist u. a. ein dem Bremskraftverstärker 1 zugeordneter Elektromagnet ansteuerbar, der eine vom Fahrerwillen unabhängige Betätigung eines pneumatischen Steuerventils ermöglicht, das eine Luftzufuhr zum Bremskraftverstärker 1 steuert. Die Betätigung des Steuerventils durch den Fahrer erfolgt mittels eines Eingangsglieds 7, das mit dem Bremspedal 4 in kraftübertragender Verbindung steht. Die Ankopplung des Bremspedals 4 an das Eingangsglied 7 ist vorzugsweise derart ausgeführt, dass in der Betriebsart "Brake-by-wire" eine Entkopplung der kraftübertragenden Verbindung zwischen dem Bremspedal 4 und dem Eingangsglied 7 1 gewährleistet wird. Ein Wegsensor 9 dient der Erfassung des Weges einer die Verstärkungskraft des Bremskraftverstärkers 1 aufbringenden beweglichen Wand bzw. des Weges eines Ausgangsglieds des Bremskraftverstärkers 1, das seine Ausgangskraft auf einen nicht dargestellten ersten Kolben des Hauptbremszylinders 2 überträgt.

Der Pedalwegsimulator 5, der sich bei dem gezeigten Ausführungsbeispiel außerhalb des Kraftflusses zwischen dem Bremspedal 5 und dem Bremskraftverstärker 2 befindet und durch den, wie bereits erwähnt, in der Betriebsart "Brake-by-wire" eine auf das Bremspedal 4 wirkende Rückstellkraft unabhängig von einer Betätigung des Bremskraftverstärkers 1 simulierbar ist, ist derart ausgeführt, dass er mittels einer in Fig. 1 lediglich schematisch angedeuteten Zu- und Abschalteinrichtung 10 in der Betriebsart "Brake-by-wire" bei der Entkopplung der kraftübertragenden Verbindung zwischen dem Bremspedal 4 und dem Bremskraftverstärker 1 zuschaltbar und außerhalb der Betriebsart "Brake-by-wire" abschaltbar ist. An der Zu- und Abschalteinrichtung 10 stützt sich über eine Kolbenstange 21 ein Simulatorgehäuse 9 ab.

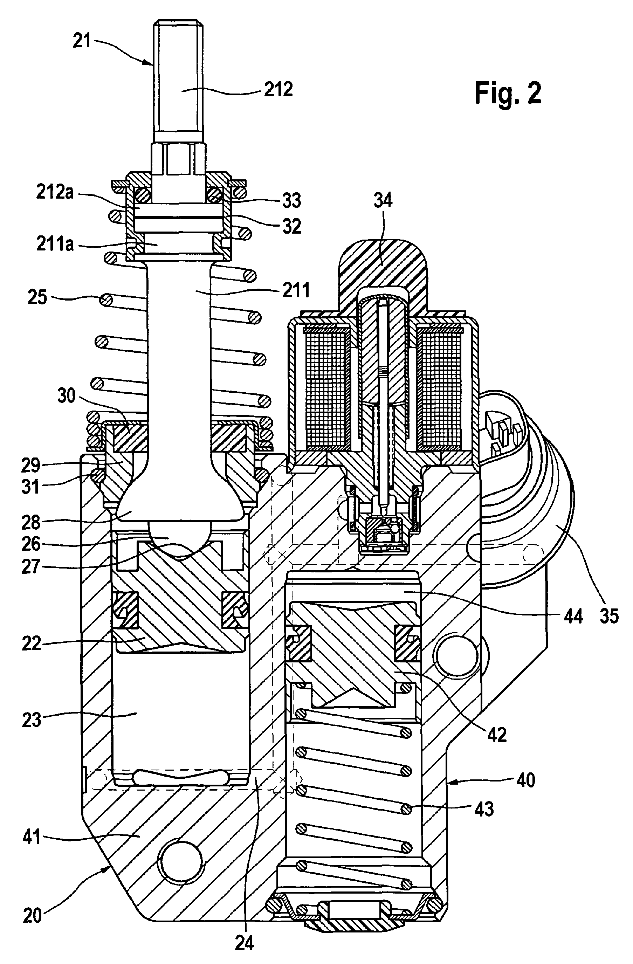

Wie insbesondere Fig. 2 zu entnehmen ist, ist die Zu- und Abschaltvorrichtung 10 im Wesentlichen durch eine Kolben-Zylinder-Anordnung 20 sowie ein hydraulisches Druckmittel-Aufnahmeelement 40 gebildet, die in einem Gehäuse 41 angeordnet sind. Das Gehäuse 41 stützt sich an einem nicht dargestellten Pedalbock ab. Der Kolben 22 der Kolben-Zylinder-Anordnung 20, der mittels der im Zusammenhang mit Fig. 1 erwähnten Betätigungsstange 21 in kraftübertragender Verbindung mit dem Simulatorgehäuse 9 steht, begrenzt einen Druckraum 23, der mittels einer mit gestrichelten Linien dargestellten gezeigten hydraulischen Verbindung 24 an das Druckmittel-Aufnahmeelement 40 angeschlossen ist, das im gezeigten Beispiel als ein Niederdruckspeicher mit einem mittels einer Feder 43 vorgespannten Kolben 42 ausgebildet ist. Der Niederdruckspeicher 40 ist dabei vorzugsweise derart ausgelegt, dass er zum Ausgleich von Temperaturänderungen bzw. Leckagen ein Druckmittel-Reservevolumen 44 aufweist. Die beiden Kolben 22, 42 sind dabei vorzugsweise trotz unterschiedlichen Funktionen von der Geometrie und vom Werkstoff her identisch ausgeführt. In der hydraulischen Verbindung 24 ist ein elektromagnetisch betätigbares Absperrventil 34 eingefügt, das ein Absperren der erwähnten Verbindung 24 ermöglicht. Der hydraulische Druck im Druckraum 23 der Kolben-Zylinder-Anordnung 20 kann mittels eines Drucksensors 35 ermittelt werden.

Wie weiterhin in Fig. 2 zu erkennen ist, ist die Kolbenstange 21 zweiteilig ausgebildet und besteht aus einem dem Kolben 22 der Zylinder-Kolben-Anordnung 20 zugeordneten ersten Kolbenstangenteil 211 sowie einem zweiten Kolbenstangenteil 212, das an dem vorhin erwähnten Simulatorgehäuse 9 angelenkt ist. Die Kolbenstangenteile 211, 212 weisen an ihren einander gegenüber liegenden Enden Abschnitte 211a, 212a größeren Durchmessers auf, wobei eine dem ersten Abschnitt 211a abgewandte Ringfläche des zweiten Abschnitts 212a an einem Dämpfungselement 33 anliegt. Das Dämpfungselement 33, das bei der gezeigten Ausführung durch einen O-Ring aus geeignetem elastischem Material besteht, wird von einem topfförmigen Halteteil 32 aufgenommen, das am ersten Kolbenstangenteil 211 bzw. dessen Abschnitt 211a größeren Durchmessers mittels einer formschlüssigen Verbindung befestigt ist. Diese Verbindung kann beispielsweise durch Einscheren des Halteteils 32 realisiert werden.

Um eine allseitige Schwenkbewegung der Kolbenstange 21 zu ermöglichen, die für die Betätigung und für einen Toleranzausgleich erforderlich ist, weist das Kolbenstangenteil 211 an seinem dem Kolben 22 zugewandten Ende einen sphärischen Gelenkkopf 26 auf, der mit einer am Kolben 22 entsprechend geformten Kopfaufnahme 27 zusammenwirkt bzw. mit ihr eine Gelenkverbindung bildet. An den Gelenkkopf 26 schließt in der axialen Richtung ein kugelsegmentförmiger Abschnitt 28 an, wobei der Gelenkkopf 26 und der Abschnitt 28 einen gemeinsamen Mittelpunkt aufweisen. In der unbetätigten Stellung der Zylinder-Kolben-Anordnung 20 liegt der kugelsegmentförmige Abschnitt 28 an einem entsprechend geformten Anschlagelement 29 unter Vorspannung einer Feder 25 an. Das Anschlagelement 29, das mittels eines Drahtverschlusses 31 im Gehäuse der Zylinder-Kolben-Anordnung 20 gesichert ist, nimmt einen Abstreifer 30 auf, der die Lauffläche des Kolbens 22 vor Verunreinigungen schützt.

Die Funktion der beschriebenen Betätigungseinheit ist in der eingangs genannten Patentanmeldung WO 2006/084864 A1 bekannt, so dass eine Beschreibung nicht erforderlich ist.

## Patentansprüche

1. Betätigungseinheit für eine Kraftfahrzeugbremsanlage vom Typ "Brake-by-wire", die aufweist:
a) einen Bremskraftverstärker (1), der sowohl mittels eines Bremspedals (4) als auch fahrerwunschabhängig sowie unabhängig vom Fahrerwillen mittels einer elektronischen Steuereinheit betätigbar ist, wobei zwischen dem Bremspedal (4) und dem Bremskraftverstärker (1) Mittel vorgesehen sind, die in der Betriebsart "Brake-by-wire" eine Entkopplung einer kraftübertragenden Verbindung zwischen Bremspedal (4) und Bremskraftverstärker (1) ermöglichen,
b) einen dem Bremskraftverstärker (1) nachgeschalteten Hauptbremszylinder (2),
c) Mittel zum Erfassen eines Fahrerwunsches bzw. des Betätigungsweges des Bremspedals (4),
d) einen mit dem Bremspedal (4) zusammenwirkenden Pedalwegsimulator (5), durch den in der Betriebsart "Brake-by-wire" eine auf das Bremspedal (4) wirkende Rückstellkraft unabhängig von einer Betätigung des Bremskraftverstärkers (1) simulierbar ist, sowie
e) eine hydraulische Zu- bzw. Abschalteinrichtung (10), die den Pedalwegsimulator (5) in der Betriebsart "Brake-by-wire" zu- und außerhalb der Betriebsart "Brake-by-wire" abschaltet und die durch eine Zylinder-Kolben-Anordnung (10) gebildet ist, deren Druckraum (23) mittels einer absperrbaren Verbindung (24) mit einem Druckmittelvolumen-Aufnahmeelement (40) verbunden ist und an deren Kolben (22) sich über eine Kolbenstange (21) ein Simulatorgehäuse (9) abstützt, **dadurch gekennzeichnet, dass** zwischen dem Kolben (22) und der Kolbenstange (21) eine Verbindung (26, 27) vorgesehen ist, deren Freiheitsgrad = 3 ist, wobei die Verbindung zwischen dem Kolben (22) und der Kolbenstange (21) als eine Gelenkverbindung ausgebildet ist, bei der die Kolbenstange (21) einen sphärischen Gelenkkopf (26) aufweist und der Kolben (22) mit einer entsprechend ausgebildeten Kopfaufnahme (27) versehen ist und wobei die Kolbenstange (21) einen kugelsegmentförmigen Abschnitt (28) aufweist, der in unbetätigter Stellung der Zylinder-Kolben-Anordnung (20) an einem entsprechend geformten Anschlagelement (29) unter Vorspannung einer Feder (25) anliegt.

2. Betätigungseinheit nach Anspruch 1 **dadurch gekennzeichnet, dass** der sphärische Gelenkkopf (26) und der kugelsegmentförmige Abschnitt (28) den gleichen Mittelpunkt aufweisen.

3. Betätigungseinheit nach Anspruch 1 oder 2 **dadurch gekennzeichnet, dass** das Anschlagelement (29) einen Abstreifer (30) zum Schutz der Lauffläche des Kolbens (22) vor Verunreinigungen aufnimmt.

4. Betätigungseinheit nach Anspruch 1, 2 oder 3 **dadurch gekennzeichnet, dass** das Anschlagelement (29) mittels eines Drahtverschlusses (31) gesichert ist.

5. Betätigungseinheit nach einem der Ansprüche 1 bis 4 **dadurch gekennzeichnet, dass** die Kolbenstange (21) zweiteilig ausgebildet ist und aus einem dem Kolben (22) zugeordneten ersten Kolbenstangenteil (211) sowie einem dem Simulatorgehäuse (9) zugeordneten zweiten Kolbenstangenteil (212) besteht, das mit einem am ersten Kolbenstangenteil (211) befestigten Dämpfungselement (33) zusammen wirkt.

6. Betätigungseinheit nach Anspruch 5 **dadurch gekennzeichnet, dass** das erste Kolbenstangenteil (211) sowie das zweite Kolbenstangenteil (212) aneinander anliegende Abschnitte (211a, 212a) größeren Durchmessers aufweisen, wobei am Abschnitt (211a) größeren Durchmessers des ersten Kolbenstangenteiles (211) ein topfförmiges Halteteil (32) befestigt ist, das das Dämpfungselement (33) aufnimmt.

7. Betätigungseinheit nach einem der Ansprüche 1 bis 6 **dadurch gekennzeichnet, dass** das Druckmittelvolumen-Aufnahmeelement (40) als ein Niederdruckspeicher ausgebildet ist, dessen Kolben (42) identisch mit dem Kolben (22) der Zylinder-Kolben-Anordnung (20) ausgeführt ist.

8. Betätigungseinheit nach Anspruch 7 **dadurch gekennzeichnet, dass** der Niederdruckspeicher (40) derart ausgelegt ist, dass er zum Ausgleich von Temperaturänderungen bzw. Leckagen ein Druckmittel-Reservevolumen aufweist.

9. Betätigungseinheit nach einem der Ansprüche 1 bis 8 **dadurch gekennzeichnet, dass** zum Erfassen des Drucks im Druckraum (23) der Zylinder-Kolben-Anordnung (20) ein Drucksensor (35) vorgesehen ist.

10. Betätigungseinheit nach einem der Ansprüche 1 bis 9 **dadurch gekennzeichnet, dass** am Anschlagelement (29) die koaxial zur Kolbenstange (21) angeordnete Feder (25) abgestützt ist, die der Rückstellung des Simulatorgehäuses (9) bzw. des Bremspedals (4) dient.

## Claims

1. Activation unit for a motor vehicle brake system of the "brake-by-wire" type, which has:
a) a brake booster (1) which can be activated either by means of a brake pedal (4) or as a function of a driver's request or independently of the driver's will by means of an electronic control unit, with means which permit decoupling of a force-transmitting connection between the brake pedal (4) and brake booster (1) in the "brake-by-wire" operating mode being provided between the brake pedal (4) and the brake booster (1),
b) a master brake cylinder (2) which is connected downstream of the brake booster (1),
c) means for sensing a driver's request or the activation travel of the brake pedal (4),
d) a pedal travel simulator (5) which interacts with the brake pedal (4) and by means of which a restoring force which acts on the brake pedal (4) in the "brake-by-wire" operating mode can be simulated independently of activation of the brake booster (1), and
e) a hydraulic activation and deactivation device (10) which activates the pedal travel simulator (5) in the "brake-by-wire" operating mode and deactivates it outside the "brake-by-wire" operating mode, and which is formed by a cylinder-piston arrangement (20) whose pressure space (23) is connected by means of a disconnectable connection (24) to a pressure medium volume accommodating element (40) and on whose piston (22) a simulator housing (9) is supported via a piston rod (21), **characterized in that** a connection (26, 27) whose degree of freedom = 3 is provided between the piston (22) and the piston rod (21), the connection between the piston (22) and the piston rod (21) being embodied as an articulated connection in which the piston rod (21) has a spherical articulation head (26), and the piston (22) is provided with a correspondingly formed head receptacle (27) and the piston rod (21) having a ball segment shaped section (28) which, in the unactivated position of the cylinder-piston arrangement (20), bears against a correspondingly shaped stop element (29) with prestress of a spring (25).

2. Activation unit according to Claim 1, **characterized in that** the spherical articulation head (26) and the ball segment shaped section (28) have the same center point.

3. Activation unit according to Claim 1 or 2, **characterized in that** the stop element (29) accommodates a stripping element (30) for protecting the running surface of the piston (22) against soiling.

4. Activation unit according to Claim 1, 2 or 3, **characterized in that** the stop element (29) is protected by means of a wire closure (31).

5. Activation unit according to one of Claims 1 to 4, **characterized in that** the piston rod (21) is embodied in two parts and is composed of a first piston rod part (211), which is assigned to the piston (22), and of a second piston rod part (212), which is assigned to the simulator housing (9) and interacts with a damping element (33) which is attached to the first piston rod part (211).

6. Activation unit according to Claim 5, **characterized in that** the first piston rod part (211) and the second piston rod part (212) have sections (211a, 212a) which bear one against the other and have a relatively large diameter, a pot shaped securing part (32), which accommodates the damping element (33), being attached to the section (211a) with a relatively large diameter of the first piston rod part (211).

7. Activation unit according to one of Claims 1 to 6, **characterized in that** the pressure medium volume accommodating element (40) is embodied as a low pressure accumulator whose piston (42) is of identical design to the piston (22) of the cylinder-piston arrangement (20).

8. Activation unit according to Claim 7, **characterized in that** the low pressure accumulator (40) is configured in such a way that it has a pressure medium reserve volume for compensating changes in temperature or leaks.

9. Activation unit according to one of Claims 1 to 8 **characterized in that** a pressure sensor (35) is provided for sensing the pressure in the pressure space (23) of the cylinder-piston arrangement (20).

10. Activation unit according to one of Claims 1 to 9, **characterized in that** a spring (25), which is arranged coaxially with respect to the piston rod (21) and serves to reset the simulator housing (9) or the brake pedal (4), is supported on the stop element (29).

## Revendications

1. Unité d'actionnement pour un système de freinage de véhicule automobile du type "Brake-by-wire", qui présente:
a) un amplificateur de force de freinage (1), qui peut être actionné aussi bien au moyen d'une pédale de frein (4) qu'en fonction du souhait du conducteur ainsi qu'indépendamment de la volonté du conducteur au moyen d'une unité de commande électronique, dans lequel il est prévu entre la pédale de frein (4) et l'amplificateur de force de freinage (1) des moyens qui permettent, dans le mode de fonctionnement "Brake-by-wire", un découplage d'une liaison de transmission de force entre la pédale de frein (4) et l'amplificateur de force de freinage (1),
b) un maître-cylindre (2) de frein installé après l'amplificateur de force de freinage (1),
c) des moyens pour détecter un souhait du conducteur ou la course d'actionnement de la pédale de frein (4),
d) un simulateur de course de pédale (5) coopérant avec la pédale de frein (4), par lequel, dans le mode de fonctionnement "Brake-by-wire", une force de rappel agissant sur la pédale de frein (4) peut être simulée indépendamment d'un actionnement de l'amplificateur de force de freinage (1), ainsi que
e) un dispositif hydraulique de connexion et de déconnexion (10), qui connecte le simulateur de course de pédale (5) dans le mode de fonctionnement "Brake-by-wire" et qui le déconnecte hors du mode de fonctionnement "Brake-by-wire" et qui est formé par un ensemble à piston-cylindre (20), dont la chambre de pression (23) est raccordée à un élément de réception de volume de fluide sous pression (40) au moyen d'un raccordement pouvant être bloqué (24) et sur le piston (22) duquel une enceinte de simulateur (9) prend appui par une tige de piston (21),
**caractérisée en ce qu'**il est prévu entre le piston (22) et la tige de piston (21) une liaison (26, 27), dont le degré de liberté est égal à 3, dans laquelle la liaison entre le piston (22) et la tige de piston (21) est réalisée sous la forme d'une liaison articulée, dans laquelle la tige de piston (21) présente une tête d'articulation sphérique (26) et le piston (22) est doté d'un logement de tête (27) de forme correspondante, et dans laquelle la tige de piston (21) présente une partie (28) en forme de segment de sphère qui, dans une position non actionnée de l'ensemble à piston-cylindre (20), est appliquée sur un élément de butée (29) de forme correspondante sous la précontrainte d'un ressort (25).

2. Unité d'actionnement selon la revendication 1, **caractérisée en ce que** la tête d'articulation sphérique (26) et la partie en forme de segment de sphère (28) présentent le même point central.

3. Unité d'actionnement selon la revendication 1 ou 2, **caractérisée en ce que** l'élément de butée (29) comporte un racloir (30) pour la protection de la portée du piston (22) contre les impuretés.

4. Unité d'actionnement selon la revendication 1, 2 ou 3, **caractérisée en ce que** l'élément de butée (29) est fixé au moyen d'un verrouillage par fil (31).

5. Unité d'actionnement selon l'une quelconque des revendications 1 à 4, **caractérisée en ce que** la tige de piston (21) est réalisée en deux parties et se compose d'une première partie de tige de piston (211) associée au piston (22) ainsi que d'une deuxième partie de tige de piston (212) associée à l'enceinte de simulateur (9), qui coopère avec un élément d'amortissement (33) fixé sur la première partie de tige de piston (211).

6. Unité d'actionnement selon la revendication 5, **caractérisée en ce que** la première partie de tige de piston (211) ainsi que la deuxième partie de tige de piston (212) présentent des parties de plus grand diamètre (211a, 212a) appliquées l'une contre l'autre, dans laquelle une partie de maintien (32) en forme de godet, qui contient l'élément d'amortissement (33), est fixée sur la partie de plus grand diamètre (211a) de la première partie de tige de piston (211).

7. Unité d'actionnement selon l'une quelconque des revendications 1 à 6, **caractérisée en ce que** l'élément de réception de volume de fluide sous pression (40) se présente sous la forme d'un accumulateur à basse pression, dont le piston (42) est réalisé de manière identique au piston (22) de l'ensemble à piston-cylindre (20).

8. Unité d'actionnement selon la revendication 7, **caractérisée en ce que** l'accumulateur à basse pression (40) est conçu de telle manière qu'il présente un volume de réserve de fluide sous pression pour la compensation de variations de température ou de fuites.

9. Unité d'actionnement selon l'une quelconque des revendications 1 à 8, **caractérisée en ce qu'**il est prévu un capteur de pression (35) pour détecter la pression dans la chambre de pression (23) de l'ensemble à piston-cylindre (20).

10. Unité d'actionnement selon l'une quelconque des revendications 1 à 9, **caractérisée en ce que** le ressort (25) disposé coaxialement à la tige de piston (21), qui sert pour le rappel de l'enceinte de simulateur (9) ou de la pédale de frein (4), prend appui sur l'élément de butée (29).
